# EUROPÄISCHE PATENTSCHRIFT

(11) **EP 4 144 475 B1**
(45) Veröffentlichungstag und Bekanntmachung des Hinweises auf die Patenterteilung: **26.11.2025**
(21) Anmeldenummer: 22183233.0
(22) Anmeldetag: 06.07.2022
(51) Int. Cl.: B23K 26/364, B23K 26/359, B23K 26/03

(54) **UNIVERSELL EINSETZBARE VORRICHTUNG ZUR HERSTELLUNG EINER SOLLBRUCHLINIE IN EINEM AUSSTATTUNGSTEIL EINES FAHRZEUGES**
UNIVERSALLY APPLICABLE DEVICE FOR PRODUCING A PREDETERMINED BREAKING LINE IN A FITTING PART OF A VEHICLE
DISPOSITIF À USAGE UNIVERSEL DESTINÉ À LA FABRICATION D'UNE LIGNE DE RUPTURE DANS UNE PARTIE D'ÉQUIPEMENT D'UN VÉHICULE

(30) Priorität: 30.07.2021 DE 102021119853
(43) Veröffentlichungstag der Anmeldung: 08.03.2023
(73) Patentinhaber: JENOPTIK Automatisierungstechnik GmbH, 07745 Jena (DE)
(72) Erfinder: LUTZE, Walter, 07751 Jena (DE); BODE-MOSIG, Andreas, 07747 Jena (DE)
(74) Vertreter: Gleim Petri Patent- und Rechtsanwaltspartnerschaft mbB

(56) Entgegenhaltungen:
- EP-A1- 3 321 024
- DE-A1- 102012 209 083
- US-B1- 6 863 860

## Beschreibung

Die Erfindung betrifft eine Vorrichtung mit der, durch einen über ein Ausstattungsteil eines Fahrzeuges scannenden Bearbeitungslaserstrahl, entlang einer Sollbruchlinie, Material bis auf eine vorgegebene Restwandstärke abgetragen wird.

Die Herstellung von Sollbruchlinien in Ausstattungsteile eines Fahrzeuges, z. B. für Airbag-Öffnungen im Armaturenbrett, in der Türverkleidung oder in der Lenkradnabe oder als Bruchstellen an in den Fahrgastraum ragenden Bauteilen, wie z. B. Tassenhaltern, mittels Laser, ist seit Langem bekannt. Aufgrund der hohen Anforderungen zum einen, an deren zuverlässiges Aufbrechen im Bedarfsfall und zum anderen, an ein ästhetisches Erscheinungsbild der Ausstattungsteile, bei dem ein Fahrzeuginsasse die Sollbruchöffnungen mit bloßem Auge nicht wahrnehmen soll, wird der Materialabtrag entlang der die Sollbruchöffnungen umschreibenden Sollbruchlinien bei deren Herstellung sensorgesteuert. Auch bei anderen Anwendungen, z. B. in der Verpackungsindustrie, ist es bekannt, Sollbruchlinien als Auftrennhilfen in Behältern u. ä. einzubringen. Um eine Sollbruchlinie durch einen Materialabtrag mittels Laser herzustellen, werden in das betreffende Werkstück nicht vollständig durchtrennende Schlitze oder Löcher bzw. Mikrolöcher, die das Werkstück nur mit einem sehr kleinen Loch durchdringen, eingebracht. Durch die Sensorüberwachung können hierbei entweder eine reproduzierbare verbleibende definierte Restwandstärke oder Mikrolöcher, die mit einem unbewaffneten Auge nicht sichtbar sind, entlang der Sollbruchlinie hergestellt werden, indem bei Detektion von durch die Restwand oder das Mikroloch transmittierender Strahlungsenergie die Überschreitung eines vorgegebenen Schwellwertes als Steuergröße verwendet wird. Dazu ist wenigstens ein Einzelsensor auf einer dem Laser gegenüberliegenden Seite des Werkstückes (Sichtseite) angeordnet, der während der Bearbeitung einen transmittierenden Anteil der Bearbeitungslaserstrahlung dann detektiert, wenn das Werkstück innerhalb der Sollbruchlinie am jeweiligen Bearbeitungsort nur noch eine bestimmte Restwandstärke bzw. ein Mikroloch (nachfolgend nur Restwandstärke) aufweist. Die erforderliche Relativbewegung, zur Erzeugung von Sollbruchlinien mittels einer Energiestrahlung, kann sowohl durch den Laserstrahl als Werkzeug als auch das Werkstück, hier das Ausstattungsteil, erzeugt werden. Bei einer Bewegung des Laserstrahls wird entweder ein Einzelsensor synchron mitgeführt oder es ist eine Anordnung von Einzelsensoren entlang der Sollbruchlinie vorhanden ist, sodass jeder mögliche Bearbeitungsort entlang der Sollbruchlinie im Sichtfeld wenigstens eines Einzelsensors liegt.

Bei einem synchron mitgeführten Einzelsensor ist ein durch ihn gebildetes gleiches Signal ein Maß für eine gleiche Restwandstärke.

Bei einer Anordnung von Einzelsensoren, sind diese in ihrer Empfindlichkeit aufeinander abstimmt, sodass bei einer gleichen transmittierenden Strahlung die von den empfangenen Einzelsensoren gebildeten Einzelsignale ein gleiches resultierendes Signal ergeben, welches ein Maß für eine gleiche Restwandstärke ist. Dabei wird unter der Empfindlichkeit der Dynamikbereich und die Auflösung innerhalb des Dynamikbereiches sowie der Spektralbereich und das spektrale Auslösungsvermögen des jeweiligen Einzelsensors verstanden. Eine unterschiedliche Empfindlichkeit weisen Einzelsensoren insbesondere dann auf, wenn sie in einem unterschiedlichen Spektralbereich und oder einen unterschiedlichen Dynamikbereich Signale liefern.

Ob die Sollbruchlinie durch im weitesten Sinne runde Löcher oder ausgedehnte Schlitze, mit kürzeren oder längeren dazwischen verbleibenden Stegen und mit einer größeren oder kleineren, bis hin zu Null gehenden, Restwandstärke erzeugt werden, wird in Abhängigkeit von den Materialeigenschaften des Ausstattungsteils so konzipiert, dass eine Sollbruchlinie entsteht, die mit einer vorgegebenen, definierten Aufreißkraft geöffnet werden kann. Abhängig von der Materialwahl, kann das bei unterschiedlichsten Restwandstärken sein.

Unter einer transmittierenden Strahlung soll im Sinne dieser Beschreibung die am Bearbeitungsort durch das Material transmittierende Bearbeitungslaserstrahlung und eine am Bearbeitungsort durch Wechselwirkung der Bearbeitungslaserstrahlung mit dem Material entstehende Strahlung verstanden werden. Eine gleiche transmittierende Strahlung ist eine Strahlung mit gleichen spektralen Anteilen und gleicher Intensität.

Aus dem Stand der Technik bekannte Vorrichtungen unterscheiden sich in der Ausführung der Sensoren, dahingehend, dass entweder ein Einzelsensor, eine linienförmige Anordnung von Einzelsensoren oder eine Matrix von Einzelsensoren vorhanden sind. Die Empfindlichkeit, die für alle Einzelsensoren ist gleich und wird mit der Konzeption der Vorrichtung in Abhängigkeit von den Materialeigenschaften des Ausstattungsteils vorgegeben. Die Anpassung einer vorhandenen Vorrichtung auf eine zu erwartende, auftreffende transmittierende Strahlung erfolgt gegebenenfalls über eine elektronische Änderung der Empfindlichkeit der Einzelsensoren oder über das Vorschalten von Filtern.

Wie bereits erläutert soll im Sinne dieser Anmeldung unter der Empfindlichkeit der Dynamikbereich und die Auflösung innerhalb des Dynamikbereiches sowie der Spektralbereich und das spektrale Auslösungsvermögen des jeweiligen Einzelsensors subsumiert sein. Eine unterschiedliche Empfindlichkeit weisen Einzelsensoren insbesondere dann auf, wenn sie in einem unterschiedlichen Spektralbereich und oder einen unterschiedlichen Dynamikbereich Signale liefern.

Die EP 3 321 024 A1 (Basis für den Oberbegriff des Anspruchs 1) offenbart eine Vorrichtung zur Herstellung einer Schwächungslinie durch Materialabtrag an einem flächenhaften Werkstück mittels Laserstrahlung, wobei die Vorrichtung auf der Rückseite des Werkstücks eine Sensoranordnung mit mehreren Sensoren zur Detektion von durch das Werkstück transmittierter Laserstrahlung umfasst.

Es ist die Aufgabe der Erfindung eine Vorrichtung zu schaffen, die ohne, dass es einer individuellen Anpassung bedarf, flexible für ein breites Materialspektrum von Ausstattungsteilen eines Fahrzeuges einsetzbar ist.

Diese Aufgabe wird für eine Vorrichtung zur Herstellung einer Sollbruchlinie in ein Ausstattungsteil eines Fahrzeuges mit einem Laserstrahlgenerator , einem Laserscanner und einer linienförmigen oder matrixförmigen ersten Sensoranordnung mit ersten Einzelsensoren einer gleichen ersten Empfindlichkeit und einem gleichen Öffnungswinkel, wobei die erste Sensoranordnung innerhalb eines Scannbereiches des Laserscanners angeordnet ist und unmittelbar benachbarte erste Einzelsensoren einen jeweils gleichen Abstand zueinander und sich überlappende Sichtfelder aufweisen, dadurch gelöst, dass wenigstens eine gleiche linienförmige oder matrixförmige zweite Sensoranordnung von zweiten Einzelsensoren vorhanden ist, die innerhalb des Scannbereiches des Laserscanners zu der ersten Sensoranordnung versetzt angeordnet ist, und die zweiten Einzelsensoren eine gleiche zweite Empfindlichkeit aufweisen, die sich von der ersten Empfindlichkeit unterscheidet.

Es ist von Vorteil, wenn die ersten Einzelsensoren und die zweiten Einzelsensoren paarweise sich überdeckende Sichtfelder aufweisen.

Eine vorteilhafte Möglichkeit für die unterschiedliche Empfindlichkeit der ersten Einzelsensoren und die der zweiten Einzelsensoren betrifft unterschiedliche Dynamikbereiche.

Alternativ oder zusätzlich zu unterschiedliche betrifft die unterschiedliche Empfindlichkeit der ersten Einzelsensoren und die der zweiten Einzelsensoren unterschiedliche Spektralbereiche oder / und unterschiedliche Auflösungen.

Bevorzugt sind genau eine erste und eine zweite Sensoranordnung oder eine erste, eine zweite und eine dritte Sensoranordnung vorhanden.

Nachfolgend wird die Erfindung an Ausführungsbeispielen anhand von Zeichnungen näher erläutert. Hierzu zeigen:
- Fig. 1: eine schematische Darstellung einer Vorrichtung gemäß dem Stand der Technik mit einer ersten Sensoranordnung und die generierten Signale an zwei verschiedenen Bearbeitungsorten,
- Fig. 2: eine schematische Darstellung einer erfindungsgemäßen Vorrichtung mit einer ersten und einer zweiten Sensoranordnung und die generierten Signale an zwei verschiedenen Bearbeitungsorten,
- Fig. 3: eine schematische Darstellung der Bearbeitung an einem Bearbeitungsort mit einer Vorrichtung gemäß Fig. 2a zu zwei Zeitpunkten und durch ein Sensorpaar generierten Signale zu den Zeitpunkten und
- Fig. 4: eine schematische Darstellung der Bearbeitung an einem Bearbeitungsort mit einer Vorrichtung umfassend eine erste, eine zweite und eine dritte Sensoranordnung, zu zwei Zeitpunkten und die durch ein Sensortripple generierten Signale zu den Zeitpunkten.

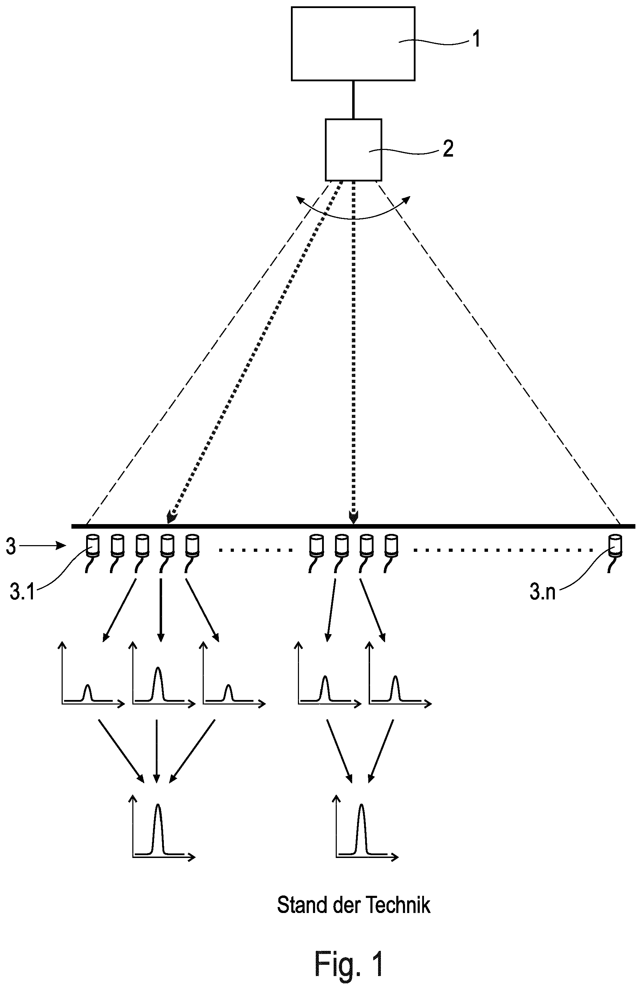

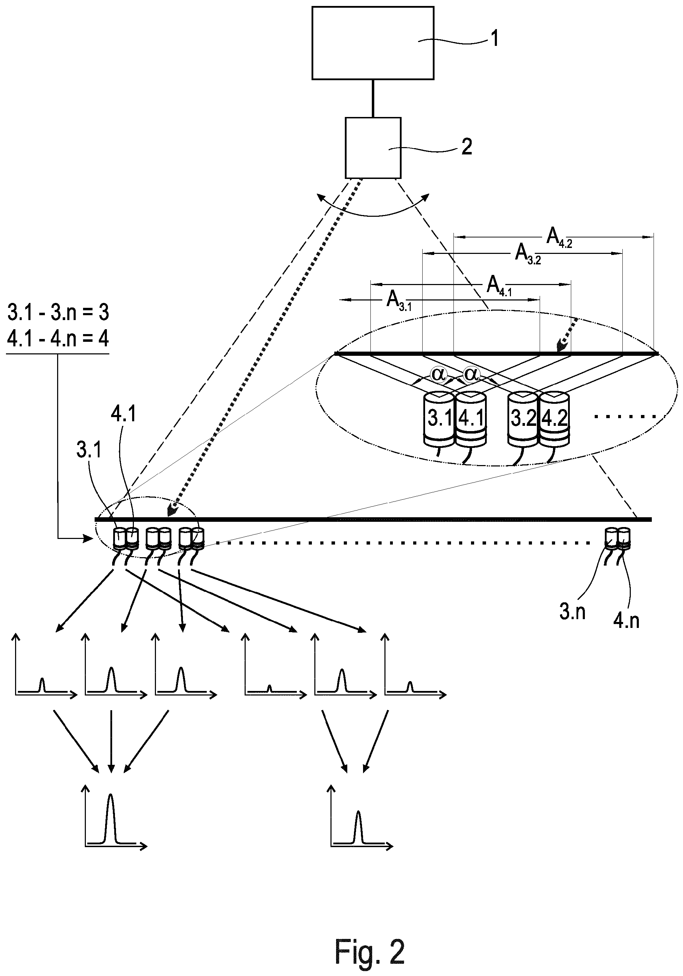

In **Fig.** 2 ist ein Ausführungsbeispiel für eine erfindungsgemäße Vorrichtung zur Herstellung einer Sollbruchlinie in ein Ausstattungsteil eines Fahrzeuges schematisch dargestellt. Sie enthält, gleich einer aus der Praxis bekannten Vorrichtung gemäß dem Stand der Technik, wie in Fig. 1 schematisch gezeigt, einen Lasergenerator 1, einen Laserscanner 2 und eine erste Sensoranordnung 3 mit einer Vielzahl von ersten Einzelsensoren 3.1-3.n. Die erste Sensoranordnung 3 kann sowohl linienförmig als auch matrixförmig sein.

Eine linienförmige Ausführung der ersten Sensoranordnung 3, erfordert zwar weniger erste Einzelsensoren 3.1-3.n, ist aber an eine spezielle Linienführung und Lage der Sollbruchlinie innerhalb eines Anbauteils gebunden.

Eine matrixförmige Ausführung der ersten Sensoranordnung 3, bedarf hingegen ein Vielfaches von ersten Einzelsensoren 3.1-3.n im Vergleich zu einer linienförmigen Ausführung, ist aber flexibel, zur Herstellung von Sollbruchlinien unterschiedlicher Lage am Ausstattungsteil oder unterschiedlicher Linienführungen, verwendbar.

Damit für eine gleiche Restwandstärke an jedem Bearbeitungsort entlang der Sollbruchlinie, verursacht durch die transmittierende Strahlung, ein gleiches resultierendes Signal gebildet wird, sind die ersten Einzelsensoren 3.1-3.n, unabhängig davon, ob die erste Sensoranordnung 3 linienförmig oder matrixförmig ausgeführt ist, in einem gleichen Abstand zu den jeweils unmittelbar benachbarten ersten Einzelsensoren 3.1-3.n angeordnet, haben einen gleichen Öffnungswinkel α und weisen eine gleiche Empfindlichkeit auf.

Der Öffnungswinkel α ist so groß, dass an jedem Bearbeitungsort transmittierende Strahlung von mehreren ersten Einzelsensoren 3.1-3.n detektiert wird. Die von den detektierenden ersten Einzelsensoren 3.1-3.n gebildeten Einzelsignale ergeben ein resultierendes Signal, welches ein Maß für die Intensität der transmittierenden Strahlung am Bearbeitungsort ist. Daraus lässt sich in Kenntnis der Transmissionseigenschaften des Materials des Anbauteils oder anhand von zuvor ermittelten Vergleichswerten denen eine Restwandstärke zugeordnet ist, die Restwandstärke an dem Bearbeitungsort ableiten.

Die erste Sensoranordnung 3 ist innerhalb eines Scannbereiches des Laserscanners 2 angeordnet, sodass einem von dem Lasergenerator ausgesandter Bearbeitungslaserstrahl in jeder Scannposition mehreren ersten Einzelsensoren 3.1-3.n zugeordnet ist, das heißt transmittierende, von einem Bearbeitungsort kommende Strahlung, wird durch mehrere erste Einzelsensoren 3.1-3.n detektiert. Soweit unterscheidet sich eine erfindungsgemäße Vorrichtung nicht von einer Vorrichtung gemäß dem Stand der Technik.

Es ist erfindungswesentlich, dass wenigstens eine gleiche linienförmige bzw. matrixförmige zweite Sensoranordnung 4, wie die erste Sensoranordnung 3 vorhanden und zu dieser versetzt angeordnet ist, und die zweite Sensoranordnung 4 zweite Einzelsensoren 4.1-4.n umfasst die untereinander eine gleiche zweite Empfindlichkeit aufweisen, die sich von der ersten Empfindlichkeit der ersten Einzelsensoren 3.1-3.n unterscheidet.

Vorteilhaft bilden jeweils ein erster Einzelsensor 3.1-3.n und ein zweiter Einzelsensor 4.1-4.n ein Sensorpaar, deren Sichtfelder A_{3.1-4.n} sich nahezu vollständig überdecken.

Praktisch können die Sensorpaare, keine sich vollständig überdeckende Sichtfelder A_{3.1-4.n} aufweisen, da sie nicht an einem selben Ort angeordnet sein können. Indem die ersten Einzelsensoren 3.1-3.n und die zweiten Einzelsensoren 4.1-4.n nicht nur einen gleichen Öffnungswinkel α, sondern auch einen großen Öffnungswinkel α aufweisen und paarweise möglichst dicht zueinander angeordnet sind, überdecken sich die Sichtfelder A_{3.1-4.n} der jeweils ein Paar bildenden ersten und zweiten Einzelsensoren 3.1-3.n, 4.1-4.nso stark, dass sie als zusammenfallend und damit als sich vollständig überdeckende Sichtfelder A_{3.1-4.n} betrachtet werden können.

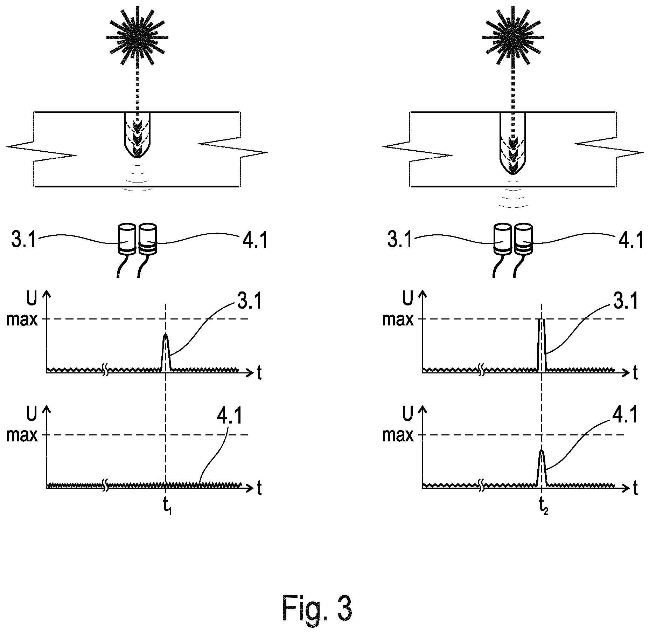

In **Fig. 3** ist die Bearbeitung an einem selben Bearbeitungsort zu verschiedenen Zeitpunkten t1, t2 gezeigt. Der Unterschied in der Empfindlichkeit ist hier zumindest hauptsächlich durch die unterschiedlichen Dynamikbereiche der ersten und zweiten Einzelsensoren gegeben 3.1-3.n, 4.1-4.n. Bei einer nur geringen Intensität der transmittierenden Strahlung, nach nur wenigen Scanndurchläufen, sprechen zu einem ersten Zeitpunkt t₁ nur die ersten Einzelsensoren 3.1-3.n an, von denen hier nur einer dargestellt ist, während bei einer höheren Intensität der transmittierenden Strahlung, nach mehr Scanndurchläufen, zu einem zweiten Zeitpunkt t₂, die ersten Einzelsensoren 3.1-3.n übersteuern und die zweiten Einzelsensoren 4.1-4.n, von denen ebenfalls nur einer gezeigt ist, zur Intensität der transmittierenden Strahlung korrelierende Signale liefern

Die Dynamikbereiche der ersten Einzelsensoren 3.1-3.n und der zweiten Einzelsensoren 4.1-4.n sowie deren Überlappung können vorteilhaft auch so gewählt werden, dass ein jeweils resultierendes Signal, welches ein Maß für das Erreichen der bestimmten Restwandstärke ist, durch die ersten Einzelsensoren 3.1-3.n und die zweiten Einzelsensoren 4.1-4.n gebildet wird. Dabei kann sich vorteilhaft auch die Auflösung innerhalb der unterschiedlichen Dynamikbereiche unterscheiden, wobei die zweiten Einzelsensoren 4.1-4.n, die weniger empfindlich sind als die ersten Einzelsensoren 3.1-3.n die höher Auflösung aufweisen.

In Summe steht damit ein größerer Dynamikbereich für die Herstellung von Sollbruchlinien zur Verfügung. Die in der Zeichnung angegebene Empfindlichkeit ist nur beispielhaft.

Der größere resultierende Dynamikbereich kann auch genutzt werden, um an verschiedenen Orten entlang der Sollbruchlinie bis auf eine verschiedene Restwandstärke abzutragen. Oder es kann der Abtrag in unterschiedlichen Bearbeitungsregimen erfolgen, wenn die ersten Einzelsensoren 3.1- 3.n oder die zweiten Einzelsensoren 4.1-4.n detektieren
Durch die zwei Sensoranordnungen 3,4 kann die Vorrichtung weiterhin z.B. zur Bearbeitung von unterschiedlichen Ausstattungsteilen verwendet werden, die ein sehr unterschiedliches Transmissionsverhalten für die Bearbeitungslaserstrahlung haben, oder es kann z.B. nach Detektion einer geringen Intensität der transmittierenden Strahlung, die durch die ersten Einzelsensoren 3.1-3.n detektiert wird, das Bearbeitungsregime geändert werden, während bei einer vergleichsweise hohen Intensität der transmittierenden Strahlung, die durch die zweiten Einzelsensoren 4.1-4.n detektiert wird, die Bearbeitung beendet wird. Auch können an sich gleiche Ausstattungsteile bearbeitet werden, bei denen sich verschiedene Chargen im Transmissionsverhalten stark unterscheiden, z.B. bei unterschiedlich eingefärbtem Leder, da durch die Summation der beiden Dynamikbereiche ein größerer resultierender Dynamikbereich zur Verfügung steht.

Alternativ können die ersten und zweiten Einzelsensoren3.1-3.n. 4.1-4.n so ausgewählt sein, dass sie sich in ihrem Spektralbereich unterscheiden. Dabei sind die ersten Einzelsensoren 3.1-3.n mehr für das Spektrum der Bearbeitungslaserstrahlung und die zweiten Einzelsensoren 4.1-4.n mehr für das Spektrum der am Bearbeitungsort durch Wechselwirkung der Bearbeitungslaserstrahlung mit dem Material entstehende Strahlung empfindlich oder umgekehrt.

Die erste und die zweite Empfindlichkeit können sich auch in einer Kombination von unterschiedlichem Dynamikbereich und unterschiedlichem Spektralbereich unterscheiden.

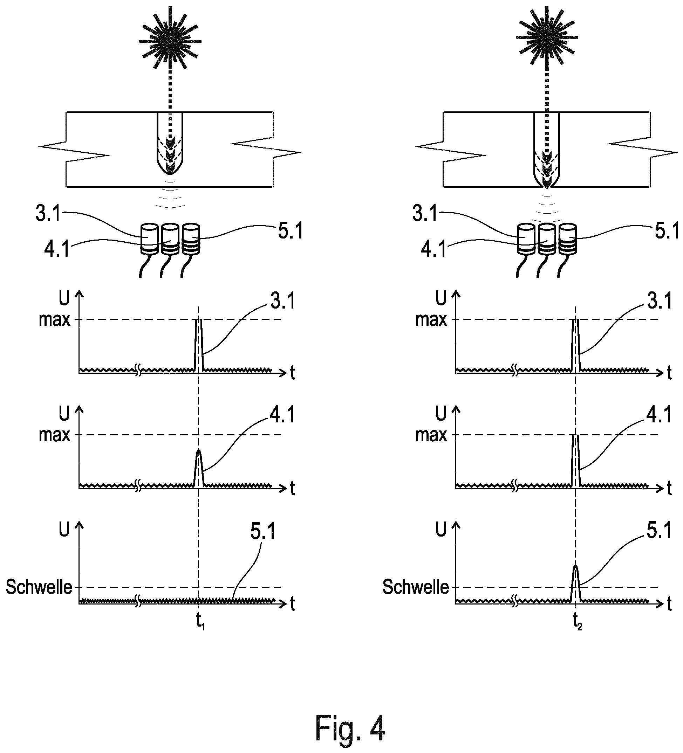

**In** **Fig.** 4 sind für ein weiteres Ausführungsbeispiel die Signale eines ersten, zweiten und dritten Einzelsensors 3.1,4.1,5.1 zu zwei Zeitpunkten t₁, t₂ gezeigt. In diesem Ausführungsbeispiel weist die Vorrichtung zusätzlich eine dritte Sensoranordnung 5 mit dritten Einzelsensoren 5.1-5.n auf. Dargestellt sind hier von jeder der Sensoranordnungen jeweils ein Einzelsensor, die, in Analogie zum vorherigen Ausführungsbeispiel mit Sensorpaaren, hier Sensortripple bilden.

Vorteilhaft ist die dritte Empfindlichkeit des jeweils zu einem Sensortripple gehörenden dritten Einzelsensors 5.1-5.n so festgelegt, dass ein aus den Signalen der dritten Einzelsensoren 5.1-5.n gebildetes resultierendes Signal beim Erreichen einer Sicherheitsschwelle als ein Maß für die Unterschreitung der einzustellenden Restwandstärke bildet und damit eine Fehlermeldung darstellt. Das heißt, während ein durch die Signale der zweiten Einzelsensoren 3.1-3.n gebildetes bestimmtes resultierendes Signal als ein Maß für das Erreichen einer bestimmten Restwandstärke darstellt, bedeutet bereits ein erstes aus den Signalen der dritten Einzelsensoren 5.1-5.n gebildetes resultierendes Signal, dass die Sollbruchlinie nicht mehr den Anforderungen genügt.

Darüber hinaus sind die zuvor beschriebenen Möglichkeiten zu einer Vorrichtung mit nur ersten Einzelsensoren 3.1-3.n und zweiten Einzelsensoren 4.1-4.n auch auf eine Vorrichtung mit zusätzlichen dritten Einzelsensoren 5.1-5.n übertragbar.

In dem die Vorrichtung mehrere gleiche Sensoranordnungen aufweist, die jede für sich allein an einem Bearbeitungsort entlang der Solbruchlinie transmittierende Strahlung durch mehrere Einzelsensoren detektiert und die Einzelsensoren der verschiedenen Sensoranordnungen eine unterschiedliche Empfindlichkeit aufweisen, wird der Empfindlichkeitsbereich, der in einem breiteren spektralen Spektrum und/oder einem breiteren Dynamikbereich liegt, gegenüber einer Vorrichtung gemäß dem Stand der Technik vergrößert.

### Bezugszeichenliste

- 1: Laserstrahlgenerator
- 2: Laserscanner
- 3: erste Sensoranordnung
- 3.1-3.n: erste Einzelsensoren
- 4: zweite Sensoranordnung
- 4.1-4.n: zweite Einzelsensoren
- 5: dritte Sensoranordnung
- 5.1-5.n: dritte Einzelsensoren

- α: Öffnungswinkel
- A_{3.1-4.n}: Sichtfeld
- t₁: erster Zeitpunkt
- t₂: zweiter Zeitpunkt

## Patentansprüche

1. Universell einsetzbare Vorrichtung zur Herstellung einer Sollbruchlinie in ein Ausstattungsteil eines Fahrzeuges mit einem Laserstrahlgenerator (1), einem Laserscanner (2) und einer linienförmigen oder matrixförmigen ersten Sensoranordnung (3) mit ersten Einzelsensoren (3.1-3.n) einer gleichen ersten Empfindlichkeit und einem gleichen Öffnungswinkel (α), wobei die erste Sensoranordnung (3) innerhalb eines Scannbereiches des Laserscanners (2) angeordnet ist und unmittelbar benachbarte erste Einzelsensoren (3.1-3.n) einen jeweils gleichen Abstand zueinander und sich überlappende Sichtfelder (A_{3.1-4.n}) aufweisen, **dadurch gekennzeichnet,**
**dass** wenigstens eine gleiche linienförmige oder matrixförmige zweite Sensoranordnung (4) von zweiten Einzelsensoren (4.1-4.n) vorhanden ist, die innerhalb des Scannbereiches des Laserscanners (2) zu der ersten Sensoranordnung (3) versetzt angeordnet ist, und die zweiten Einzelsensoren (4.1-4.n) eine gleiche zweite Empfindlichkeit aufweisen, die sich von der ersten Empfindlichkeit unterscheidet.

2. Universell einsetzbare Vorrichtung zur Herstellung einer Sollbruchlinie in ein Ausstattungsteil eines Fahrzeuges nach Anspruch 1, **dadurch gekennzeichnet,**
**dass** die ersten Einzelsensoren (3.1-3.n) und die zweiten Einzelsensoren (4.1-4.n) paarweise sich überdeckende Sichtfelder (A_{3.1-4.n}) aufweisen.

3. Universell einsetzbare Vorrichtung zur Herstellung einer Sollbruchlinie in ein Ausstattungsteil eines Fahrzeuges nach Anspruch 1 oder 2, **dadurch gekennzeichnet, dass** die unterschiedliche Empfindlichkeit der ersten Einzelsensoren (3.1-3.n) und die der zweiten Einzelsensoren (4.1-4.n) unterschiedliche Dynamikbereiche betrifft.

4. Universell einsetzbare Vorrichtung zur Herstellung einer Sollbruchlinie in ein Ausstattungsteil eines Fahrzeuges nach Anspruch 1 oder 2, **dadurch gekennzeichnet, dass** die unterschiedliche Empfindlichkeit der ersten Einzelsensoren (3.1-3.n) und die der zweiten Einzelsensoren (4.1-4.n) unterschiedliche Spektralbereiche betrifft.

5. Universell einsetzbare Vorrichtung zur Herstellung einer Sollbruchlinie in ein Ausstattungsteil eines Fahrzeuges nach Anspruch 3, **dadurch gekennzeichnet,**
**dass** die unterschiedliche Empfindlichkeit auch unterschiedliche Auflösungen betreffen.

6. Universell einsetzbare Vorrichtung zur Herstellung einer Sollbruchlinie in ein Ausstattungsteil eines Fahrzeuges nach Anspruch 2 oder 3, **dadurch gekennzeichnet, dass** genau eine erste und eine zweite Sensoranordnung (3,4) vorhanden ist.

7. Universell einsetzbare Vorrichtung zur Herstellung einer Sollbruchlinie in ein Ausstattungsteil eines Fahrzeuges nach Anspruch 2, **dadurch gekennzeichnet,**
**dass** eine erste, eine zweite und eine dritte Sensoranordnung (3, 4, 5) vorhanden ist.

## Claims

1. A universally applicable device for producing a predetermined breaking line in a fitting part of a vehicle, said device comprising a laser beam generator (1), a laser scanner (2) and a linear or matrix-shaped first sensor arrangement (3) with first individual sensors (3.1-3.n) of an identical first sensitivity and an identical aperture angle (α), wherein the first sensor arrangement (3) is arranged within a scanning range of the laser scanner (2), and directly adjacent first individual sensors (3.1-3.n) are the same distance apart from one another and have overlapping fields of view (A_{3.1-4n}), **characterized in that**
at least one identical linear or matrix-shaped second sensor arrangement (4) of second individual sensors (4.1-4.n) is present, which is arranged with an offset to the first sensor arrangement (3) within the scanning range of the laser scanner (2), and the second individual sensors (4.1-4.n) have an identical second sensitivity which differs from the first sensitivity.

2. The universally applicable device for producing a predetermined breaking line in a fitting part of a vehicle according to claim 1, **characterized in that** the first individual sensors (3.1-3.n) and the second individual sensors (4.1-4.n) have fields of view (A_{3.1.4.n}) overlapping in pairs.

3. The universally applicable device for producing a predetermined breaking line in a fitting part of a vehicle according to claim 1 or 2, **characterized in that** the different sensitivity of the first individual sensors (3.1-3.n) and of the second individual sensors (4.1-4.n) concerns different dynamic ranges.

4. The universally applicable device for producing a predetermined breaking line in a fitting part of a vehicle according to claim 1 or 2, **characterized in that** the different sensitivity of the first individual sensors (3.1-3.n) and of the second individual sensors (4.1-4.n) concerns different spectral ranges.

5. The universally applicable device for producing a predetermined breaking line in a fitting part of a vehicle according to claim 3, **characterized in that** the different sensitivity also concerns different resolutions.

6. The universally applicable device for producing a predetermined breaking line in a fitting part of a vehicle according to claim 2 or 3, **characterized in that** exactly one first and one second sensor arrangement (3,4) are present.

7. The universally applicable device for producing a predetermined breaking line in a fitting part of a vehicle according to claim 2, **characterized in that** one first, one second and one third sensor arrangement (3, 4, 5) are present.

## Revendications

1. Dispositif à usage universel destiné à la fabrication d'une ligne de rupture dans une partie d'équipement d'un véhicule, comprenant un générateur de faisceau laser (1), un scanner laser (2) et un premier agencement de capteurs (3) en forme de ligne ou de matrice avec des premiers capteurs individuels (3.1-3. n) d'une même première sensibilité et d'un même angle d'ouverture (α), le premier agencement de capteurs (3) étant disposé à l'intérieur d'une zone de balayage du scanner laser (2) et des premiers capteurs individuels (3.1-3.n) directement voisins présentant respectivement un même écart entre eux et des champs de vision (A_{3.1-4.n}) qui se chevauchent, **caractérisé**
**en ce qu'**il existe au moins un deuxième agencement de capteurs (4) identique, linéaire ou matriciel, de deuxièmes capteurs individuels (4.1-4.n), qui est disposé à l'intérieur de la zone de balayage du scanner laser (2) de manière décalée par rapport au premier agencement de capteurs (3), et les deuxièmes capteurs individuels (4.1-4.n) présentent une deuxième sensibilité identique, qui se distingue de la première sensibilité.

2. Dispositif à usage universel destiné à la fabrication d'une ligne de rupture dans une partie d'équipement d'un véhicule selon la revendication 1, **caractérisé en ce que** les premiers capteurs individuels (3.1-3.n) et les deuxièmes capteurs individuels (4.1-4.n) présentent des champs de vision (A_{3.1-4.n}) qui se chevauchent par paires.

3. Dispositif à usage universel destiné à la fabrication d'une ligne de rupture dans une partie d'équipement d'un véhicule selon la revendication 1 ou 2, **caractérisé en ce que** la sensibilité différente des premiers capteurs individuels (3.1-3.n) et celle des seconds capteurs individuels (4.1-4.n) concernent des plages dynamiques différentes.

4. Dispositif à usage universel destiné à la fabrication d'une ligne de rupture dans une partie d'équipement d'un véhicule selon la revendication 1 ou 2, **caractérisé en ce que** la sensibilité différente des premiers capteurs individuels (3.1-3.n) et celle des seconds capteurs individuels (4.1-4.n) concernent des domaines spectraux différents.

5. Dispositif à usage universel destiné à la fabrication d'une ligne de rupture dans une partie d'équipement d'un véhicule selon la revendication 3, **caractérisé en ce que** les différentes sensibilités concernent également différentes résolutions.

6. Dispositif à usage universel destiné à la fabrication d'une ligne de rupture dans une partie d'équipement d'un véhicule selon la revendication 2 ou 3, **caractérisé en ce qu'**il existe exactement un premier et un deuxième agencement de capteurs (3, 4).

7. Dispositif à usage universel destiné à la fabrication d'une ligne de rupture dans une partie d'équipement d'un véhicule selon la revendication 2, **caractérisé en ce qu'**il existe un premier, un deuxième et un troisième agencement de capteurs (3, 4, 5).
